# EUROPÄISCHE PATENTSCHRIFT

(11) **EP 0 917 997 B1**
(45) Veröffentlichungstag und Bekanntmachung des Hinweises auf die Patenterteilung: **31.07.2002**
(21) Anmeldenummer: 98121591.6
(22) Anmeldetag: 20.11.1998
(51) Int. Cl.: B60R 22/26

(54) **Gurtaufroller zum Einbau in einer umlegbaren Rückenlehne**
Belt retractor for mounting in a foldable backrest
Enrouleur de ceinture destiné à être monté dans un dossier rabattable

(30) Priorität: 24.11.1997 DE 29720817 U
(43) Veröffentlichungstag der Anmeldung: 26.05.1999
(73) Patentinhaber: TRW Occupant Restraint Systems GmbH & Co. KG, 73551 Alfdorf (DE)
(72) Erfinder: Kielwein, Thomas, 73569 Eschach (DE); Rink, Jürgen, 73550 Waldstetten (DE)
(74) Vertreter: Degwert, Hartmut, Dipl.-Phys.

(56) Entgegenhaltungen:
- EP-A- 0 700 811
- DE-A- 2 927 159
- DE-U- 9 402 767
- GB-A- 2 286 624

## Beschreibung

Die Erfindung betrifft einen Gurtaufroller zum Einbau in einer umlegbaren Rückenlehne gemäß dem Oberbegriff von Anspruch 1.

Wenn der Gurtaufroller nicht direkt am Fahrzeugaufbau, sondern an einer Rückenlehne befestigt ist, werden die Gurtkräfte über die Rückenlehne und ihre Verankerung in den Fahrzeugaufbau eingeleitet. Eine umlegbare Rückenlehne muß am Fahrzeugaufbau verrastet sein, damit sie die Gurtkräfte aufnehmen und in den Fahrzeugaufbau weiterleiten kann. Die Verrastung einer umlegbaren Rückenlehne am Fahrzeugaufbau erfolgt mittels eines Schlosses, das bei Erreichen der aufrechten Endposition der Rückenlehne automatisch einrastet. Um zu vermeiden, daß bei einem nicht oder nicht vollständig eingerasteten Schloß der Sicherheitsgurt angelegt wird und der Sicherheitsgurt seine Rückhaltefunktion nicht erfüllen kann, ist der Blockiermechanismus des Gurtaufrollers aktiviert, solange die Rückenlehne nicht durch Einrasten des Schlosses verriegelt ist. Bei aktiviertem Blockiermechanismus kann kein Gurtband vom Gurtaufroller abgezogen werden.

In der gattungsgemäßen DE-A-29 27 159 ist ein Gurtaufroller zum Einbau in einer umlegbaren Rückenlehne gezeigt, bei der ein Abwickeln des Gurtbandes von einer Gurtspule verhindert ist, wenn die Lehnenverriegelungsvorrichtung einer Rückenlehne nicht verrastet ist. Dazu greift eine federbelastete Sperrklinke in die Sperrverzahnung eines Gurtaufrollers ein. Beim Einrasten der Lehnenverriegelungsvorrichtung wird die Sperrklinke durch einen Betätigungsstift eines Betätigungsgestänges außer Eingriff mit der Sperrverzahnung des Gurtaufrollers gebracht, so daß ein Abwickeln des Gurtbandes möglich ist.

Aus der GB-A-2 286 624 ist ein Gurtaufroller bekannt, der an einer umlenkbaren Rückenlehne befestigt ist. Ein Blockiermechanismus zur Blockierung der Gurtspule weist einen federbelasteten Hebelarm auf, der bei nicht eingerasteter Rückenlehne in Eingriff mit der Sperrverzahnung der Gurtspule ist. Dazu ist der Hebelarm beispielsweise mittels eines Bowdenzugs mit einer Klinke einer Vorrichtung zum Verriegeln der Rückenlehne verbunden. Bei verriegelter Rückenlehne ist der Hebelarm außer Eingriff mit der Sperrverzahnung des Gurtaufrollers.

In der DE-U-94 02 767 ist eine Vorrichtung zur Entriegelung und Verriegelung der Rücksitzlehne von Kraftfahrzeugen gezeigt. Die Vorrichtung weist eine an der Rücksitzlehne angeordnete Sperrvorrichtung auf, die in Wirkverbindung mit einer Blockiervorrichtung eines Gurtaufrollers steht, so daß bei entriegelter Sperrvorrichtung ein Abrollen des Sicherheitsgurts verhindert ist.

Durch die vorliegende Erfindung kann eine vorhandene, bewährte Konstruktion eines Gurtaufrollers auf einfache Weise nachträglich mit einer Vorrichtung ausgerüstet werden, die bewirkt, daß der Blockiermechanismus zum Blockieren der Gurtspule aktiviert ist, solange die Rückenlehne nicht durch Einrasten des Schlosses verriegelt ist.

Der erfindungsgemäße Gurtaufroller weist einen Blockiermechanismus mit zwei durch einen Steg gekoppelte Sperrklinken auf, die am Rahmen schwenkbar gelagert sind. An dem Steg ist ein Betätigungsarm angebracht, auf den ein mit dem Schloß durch einen Seilzug gekoppelter, durch eine Druckfeder belasteter Stößel einwirkt. Ein vorhandener, schon bewährter Gurtaufroller mit zwei durch einen Steg verbundene Sperrklinken kann auf einfache Weise aufgerüstet werden, indem an dem Steg ein Betätigungsarm und an dem Rahmen ein Bügel angebracht wird, in dem der axial verschiebbare Stößel gelagert und eine Druckfeder abgestützt ist, die den Stößel gegen den Betätigungsarm belastet.

Bei der bevorzugten Ausführungsform weist der Blockiermechanismus des Gurtaufrollers ein federbelastetes Betätigungselement auf, das durch ein Zugmittel mit dem Schloß gekoppelt ist. Das federbelastete Betätigungselement, beispielsweise ein Stößel, der durch eine Druckfeder vorgeschoben wird, ist beispielsweise über einen Seilzug wirkungsmäßig in solcher Weise mit der Schloßfalle gekoppelt, daß bei eingerastetem Schloß das Betätigungselement zurückgezogen wird und den Blockiermechanismus freigibt, bei nicht verrastetem Schloß jedoch das Betätigungselement durch die Federbelastung am Riegel des Blockiermechanismus angreift, um diesen in die Blockierstellung zu bewegen.

Weitere Merkmale und Vorteile der Erfindung ergeben sich aus der folgenden Beschreibung einer Ausführungsform der Erfindung und aus der Zeichnung, auf die Bezug genommen wird. In der Zeichnung zeigen:
Figur 1 eine schematische Perspektivansicht eines Gurtaufrollers, von dem nur die für die Erfindung wesentlichen Teile gezeigt sind; und
Figur 2 eine schematische Perspektivansicht zur Veranschaulichung der Funktion des Gurtaufrollers.

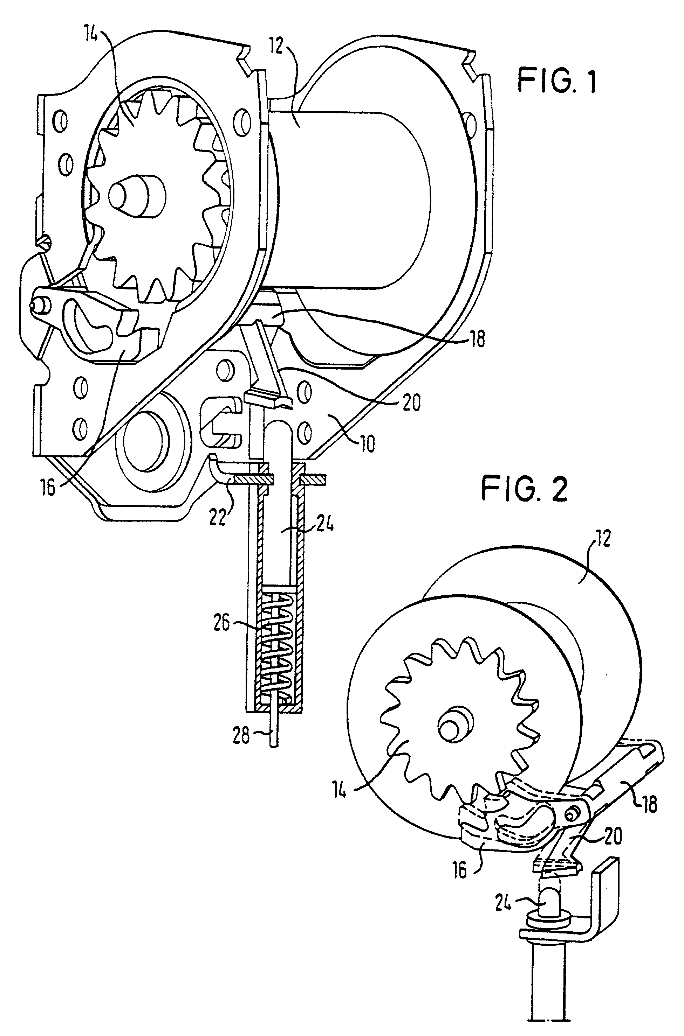

Der in der Zeichnung dargestellte Gurtaufroller besitzt einen lasttragenden Rahmen 10, der zur Befestigung an einer umlegbaren Rückenlehne des Fahrzeugs bestimmt ist. In dem Rahmen 10 ist eine Gurtspule 12 drehbar gelagert. Bei der Darstellung in Figur 1 sind die seitlichen Lagerplatten des Gurtaufrollers abgenommen, so daß ein Blockiermechanismus in Erscheinung tritt, der aus außen an die Flansche der Gurtspule 12 angesetzten Sperrzahnrädern 14 und zwei Sperrklinken 16 besteht, die durch einen Steg 18 miteinander verbunden sind. Dieser Blockiermechanismus wird durch ein hier nicht gezeigtes, fahrzeugsensitives und gurtbandsensitives Ansteuerungssystem gesteuert.

An dem die Sperrklinken 16 verbindenden Steg 18 ist ein Betätigungsarm 20 angeformt. Ferner ist an dem Rahmen 10 ein Bügel 22 befestigt, an dem ein Stößel 24 axial verschiebbar geführt und gehalten ist. An dem Bügel 22 ist eine Druckfeder 26 abgestützt, die den Stößel 24 in Richtung gegen den Betätigungsarm 20 belastet. Ein Zugseil 28 ist am Stößel 24 angeschlossen und verbindet diesen mit einem Funktionsteil des Schlosses (nicht gezeigt), mittels welchem die Rückenlehne, an der der Gurtaufroller befestigt ist, am Fahrzeugaufbau verriegelt wird. Bei diesem Funktionsteil des Schlosses kann es sich beispielsweise um die Schloßfalle handeln.

Bei der in Figur 1 gezeigten Stellung wird der Stößel 24 durch das Zugseil 28 gegen die Kraft der Druckfeder 26 zurückgezogen. Der Stößel 24 gibt in dieser Stellung den Betätigungsarm 20 frei, so daß die Sperrklinken 16 nur durch das fahrzeugsensitive und gurtbandsensitive Ansteuerungssystem des Blockiermechanismus gesteuert werden.

Ist jedoch das Schloß, mittels welchem die Rückenlehne am Fahrzeugaufbau verriegelt wird, nicht oder nicht vollständig eingerastet, wird kein Zug über das Zugseil 28 auf den Stößel 24 ausgeübt, so daß dieser durch die Druckfeder 26 gegen den Betätigungsarm 20 vorgeschoben wird. Dieser Vorgang ist in Figur 2 gestrichelt dargestellt. Über den Stößel 24 und den Betätigungsarm 20 werden die Sperrklinken 16 in Eingriff mit den Sperrzahnrädern 14 bewegt, so daß die Gurtspule 12 blockiert ist und kein Gurtband abgezogen werden kann. In diesem Zustand kann der Sicherheitsgurt nicht angelegt werden. Der Fahrzeuginsasse muß nun erst das Schloß an der Rückenlehne einrasten lassen, damit der Blockiermechanismus des Gurtaufrollers freigegeben wird und der Sicherheitsgurt angelegt werden kann.

## Patentansprüche

1. Gurtaufroller zum Einbau in einer umlegbaren Rückenlehne, die am Fahrzeugaufbau in aufrechter Gebrauchsposition durch ein Schloß verriegelbar ist, mit einer in einem Rahmen (10) drehbar gelagerten Gurtspule (12), und mit einem Blockiermechanismus (14, 16) zur selektiven drehfesten Blockierung der Gurtspule am Rahmen, wobei der Blockiermechanismus (14, 16) aktiviert ist, solange die Rückenlehne nicht durch Einrasten des Schlosses verriegelt ist, **dadurch gekennzeichnet, daß** der Blockiermechanismus zwei durch einen Steg (18) gekoppelte Sperrklinken (16) aufweist, die am Rahmen (10) schwenkbar gelagert sind, daß ein Betätigungsarm (20) an dem Steg (18) angebracht ist, und daß ein mit dem Schloß durch einen Seilzug (28) gekoppelter, durch eine Druckfeder (26) belasteter Stößel (24) auf den Betätigungsarm (20) einwirkt.

2. Gurtaufroller nach Anspruch 1, **dadurch gekennzeichnet, daß** der Stößel (24) an einem am Rahmen (10) befestigten Bügel (22) verschiebbar gelagert ist.

3. Gurtaufroller nach Anspruch 2, **dadurch gekennzeichnet, daß** die Druckfeder (26) am Bügel (22) abgestützt ist.

## Claims

1. A belt retractor for incorporating in a fold-down type backrest which can be locked in place on the vehicle body in the upright seating position by a lock, including a belt reel (12) rotatably mounted in a frame (10), and including a blocking mechanism (14, 16) for selectively blocking rotation of the belt reel on the frame, the blocking mechanism (14, 16) being activated as long as the backrest is not locked in place by latching action of the lock, **characterized in that** the blocking mechanism comprises two locking pawls (16) which are coupled by a web (18) and are swivellingly mounted on the frame (10), that an actuating arm (20) is fixed to the web (18), and that an actuating finger (24) coupled to the lock by a cable means (28) and loaded by a compression spring (26) acts on the actuating arm (20).

2. The belt retractor as set forth in claim 1, **characterized in that** the actuating finger (24) is shiftably mounted on a bracket (22) secured to the frame (10).

3. The belt retractor as set forth in claim 2, **characterized in that** the compression spring (26) is supported by the bracket (22).

## Revendications

1. Enrouleur de ceinture destiné à être monté dans un dossier rabattable qui peut être verrouillé par une serrure contre la structure du véhicule dans une position d'utilisation droite, comportant une bobine de ceinture (12) montée rotative dans un cadre (10) et un mécanisme de blocage (14, 16) pour bloquer de manière sélective la bobine de ceinture solidairement en rotation sur le cadre, le mécanisme de blocage (14, 16) étant activé tant que le dossier n'est pas verrouillé par l'encliquetage de la serrure, **caractérisé en ce que** le mécanisme de blocage présente deux cliquets d'arrêt (16) accouplés par une barrette (18), lesquels sont montés à pivotement sur le cadre (10), **en ce qu'**un bras d'actionnement (20) est monté sur la barrette (18) et **en ce qu'**un poussoir (24) couplé à la serrure par une câble de traction (28) et sollicité par un ressort de compression (26) agit sur le bras d'actionnement (20).

2. Enrouleur de ceinture selon la revendication 1, **caractérisé en ce que** le poussoir (24) est monté en déplacement sur un étrier (22) fixé sur le cadre (10).

3. Enrouleur de ceinture selon la revendication 2, **caractérisé en ce que** le ressort de compression (26) prend appui sur l'étrier (22).
